(19) Europäisches Patentamt
European Patent Office
Office européen des brevets

(11) Veröffentlichungsnummer: **0 221 400 B1**

# (12) EUROPÄISCHE PATENTSCHRIFT

(45) Veröffentlichungstag der Patentschrift: **14.06.89**

(51) Int. Cl.⁴: **C 08 F 2/24**, C 08 F 257/02, D 21 H 3/38 // (C08F257/02, 212:08, 220:02)

(21) Anmeldenummer: **86114129.9**

(22) Anmeldetag: **13.10.86**

## (54) Kationische Leimungsmittel für Papier.

(30) Priorität: **24.10.85 DE 3537824**

(43) Veröffentlichungstag der Anmeldung: **13.05.87 Patentblatt 87/20**

(45) Bekanntmachung des Hinweises auf die Patenterteilung: **14.06.89 Patentblatt 89/24**

(84) Benannte Vertragsstaaten: **CH DE FR GB IT LI SE**

(56) Entgegenhaltungen:
**EP-A- 0 150 003**
**DE-A- 2 058 120**
**DE-B- 1 073 854**
**GB-A- 1 281 683**

(73) Patentinhaber: **BAYER AG, D-5090 Leverkusen 1 Bayerwerk (DE)**

(72) Erfinder: **Probst, Joachim, Dr., Humperdinckstrasse 42, D-5090 Leverkusen (DE)**
Erfinder: **Bäumgen, Heinz, Buchenweg 10, D-5090 Leverkusen (DE)**
Erfinder: **Bömer, Bruno, Dr., Max-Planck-Strasse 53, D-5060 Bergisch Gladbach 2 (DE)**
Erfinder: **König, Joachim, Dr., Auf dem Broich 25, D-5068 Odenthal (DE)**
Erfinder: **Mottweiler, Renke, Dr., Carl-Rumpff-Strasse 47, D-5090 Leverkusen (DE)**

**EP 0 221 400 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft wäßrige, kolloiddisperse Papierleimungsmittel mit verbessertem Stabilitätsverhalten und verringerter Schaumneigung, die auf Copolymeren aus Acrylnitril, Methacrylnitril oder Styrol und Acrylsäure- oder Methacrylsäureestern basieren, die in Gegenwart von chemisch einheitlich aufgebauten quaternierten Terpolymeren aus N,N-Dimethylaminoethyl(meth)acrylat, Styrol und Acrylnitril als Emulgatoren polymerisiert werden.

Es ist bekannt (vgl. EP 0 058 313), kationische Papierleimungsmittel in Form von relativ stabilen, kolloiddispersen, meist durchscheinenden Lösungen herzustellen, bei denen man Acrylnitril oder Methacrylnitril mit Acrylsäure- oder Methacrylsäureestern in Gegenwart von speziellen polymeren kationischen Emulgatoren im wäßrigen System polymerisiert. Diese Emulgatoren sind Quaternierungsprodukte von chemisch einheitlich aufgebauten Terpolymeren aus N,N-Dimethylaminoethyl(meth)acrylat, Styrol und Acrylnitril mit Gehalten an basischem Comonomer von höchstens 40 Gew.-%. Die mittleren Teilchendurchmesser dieser kolloiddispersen Lösungen liegen zwischen 15 und 200 nm, vorzugsweise zwischen 20 und 150 nm.

In der DE-OS 3 401 573 wird die Herstellung von ebenfalls kolloiddispersen, für Schrenzpapier besonders wirksamen Papierleimungsmitteln beschrieben, wenn man entweder Mischungen von (Meth)acrylnitril, Styrol und Acrylsäure- oder Methacrylsäureester oder Mischungen von Styrol und Acrylsäure- oder Methacrylsäureester in Gegenwart der obengenannten chemisch einheitlich aufgebauten quaternierten Terpolymerisate polymerisiert.

Ein Nachteil dieser kolloiddispersen Leimungsmittel ist ihre in der Praxis oft nicht voll befriedigende Stabilität in Gegenwart von Elektrolyten und höheren Temperaturen (über 60°C), bei Anwendung von Scherkräften sowie ihre Schaumbildungstendenz. Größere Mengen an Elektrolyten können im Papierverarbeitungsprozeß dann auftreten, wenn enzymatisch abgebaute Stärke als Zusatzstoff der Leimungsflotte zugegeben wird. Die Enzymaktivität wird nach erfolgtem Abbau durch Säurezugabe (z.B. Schwefelsäure oder Salzsäure) gestoppt; die Elektrolyte entstehen dann durch Zugabe von Base, die die überschüssige Säure neutralisiert.

Da der enzymatische Stärkeabbau oft auch bei höheren Temperaturen (ca. 80°C bis 100°C) erfolgt und die Stärkelösung der Leimungsflotte meist sofort zugegeben wird, ist im allgemeinen mit einer Temperaturerhöhung der Leimungsflotte auf Temperaturen bis maximal 80°C zu rechnen. Bei diesen extremen Bedingungen agglomerieren und koagulieren die vorbeschriebenen kolloiddispersen Leimungsmittel teilweise oder vollständig; es bilden sich Belegungen auf der Papiermaschine, und der Leimungseffekt wird drastisch reduziert. Zu ähnlichen Effekten können Scherkräfte, die bei der Papierverarbeitung ebenfalls auftreten können, führen. Weiterhin von Nachteil bei den vorbeschriebenen Leimungsmitteln ist in manchen Fällen eine über das normale Maß hinausgehende Schaumneigung, die ebenfalls zu Störungen im Papierverarbeitungsprozeß führen kann.

Es wurde nun überraschenderweise gefunden, daß man elektrolyt-, scher- und thermostabile sowie wenig schäumende, kolloiddisperse Papierleimungsmittel erhält, wenn man Mischungen von (Meth)acrylnitril und/oder Styrol und Acrylsäure- oder Methacrylsäureester in Gegenwart von chemisch einheitlich aufgebauten Terpolymeren aus Dimethylaminoethyl(meth)acrylat, Styrol und Acrylnitril, die mit Monoepoxiden quaterniert worden sind, polymerisiert.

Das erfindungsgemäße Papierleimungsmittel wird als kolloiddisperse Lösung mit mittleren Teilchendurchmessern von 15 bis 200 nm erhalten, indem man in einem wäßrigen Medium eine wasserlösliche kationische, chemisch einheitlich aufgebaute Terpolymerverbindung aus

a) 7 bis 40, vorzugsweise 8 bis 30 Gew.-% N,N-Dimethylaminoethylacrylat und/oder -methacrylat,
b) 40 bis 80 Gew.-% Styrol und
c) 4 bis 50, vorzugsweise 5 bis 40 Gew.-% Acrylnitril,

auflöst, wobei die Summe der Komponenten a) bis c) stets 100 Gew.-% beträgt und von den Dimethylaminogruppen des Terpolymeren mindestens 10% mit Monoepoxiden, mit Ausnahme von Epihalogenhydrinen, quaterniert und die restlichen protoniert sind, und indem man in Gegenwart von 10 bis 70 Gew.-% – bezogen auf das folgende Monomergemisch – dieses Emulgators

d) 5 bis 95, vorzugsweise 20 bis 80 Gew.-% Acrylnitril, Methacrylnitril oder Styrol bzw. deren Mischungen und
e) 5 bis 95, vorzugsweise 20 bis 80 Gew.-% Acrylsäure- und/oder Methacrylsäureester mit 1 bis 12 C-Atomen im Alkoholrest

– wobei die Summe der Komponenten d) und e) stets 100 Gew.-% beträgt – emulgiert und die so erhaltene Emulsion einer radikalisch initiierten Emulsionspolymerisation bei Temperaturen von 20 bis 150°C unterwirft.

Vorzugsweise beträgt das Gewichtsverhältnis zwischen polymerem, kationischem Emulgator und Monomergemisch aus d) und e) 1 : 4 bis 1 : 1.

Das Papierleimungsmittel gemäß der Erfindung wird auch erhalten, wenn man neben dem genannten kationischen Emulgator einen kationischen und/oder nichtionogenen Hilfsemulgator in Mengen von 1 bis 40 Gew.-%, vorzugsweise 3 bis 20 Gew.-% bezogen auf den vorstehenden kationischen Emulgator einsetzt, wobei der nichtionogene Emulgator die Formel

$$R_1\text{-}X\text{-}(CH_2\text{-}CH_2\text{-}O)_n\text{-}H \qquad (II)$$

besitzt, worin

X O, NH oder COO bedeutet,
$R_1$ ein höherer aliphatischer cycloaliphatischer, araliphatischer oder aromatischer Kohlenwasserstoffrest mit 6-30 C-Atomen ist, und
n eine ganze Zahl $\geq$ 2 ist,

und wobei der kationische Hilfsemulgator die Formel

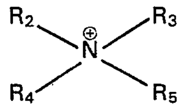

$Y^{\ominus}$

besitzt, wobei

$R_2$ und $R_3$ höhere aliphatische bzw. araliphatische Kohlenwasserstoffreste mit 6 bis 20 C-Atomen,

$R_4$ und $R_5$ niedere aliphatische Kohlenwasserstoffreste mit 1 bis 6 C-Atomen und

$Y^{\ominus}$ ein Halogenidion darstellen.

Das chemisch einheitliche aufgebaute Terpolymere aus N,N-Dimethylaminoethyl(meth)acrylat, Styrol und Acrylnitril wird im organischen Medium nach partieller oder vollständiger Neutralisation mit Säure mit Monoepoxiden z.B. der allgemeinen Formel

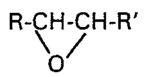

quaterniert, wobei R und R' für gleiche oder verschiedene Reste stehen und Wasserstoff, eine Alkylgruppe mit 1 bis 16 Kohlenstoffatomen, eine Cycloalkylgruppe mit 5 bis 12 Kohlenstoffatomen oder eine Arylgruppe mit 6 bis 12 Kohlenstoffatomen bedeuten, wobei die genannten Substituenten auch Heteroatome bzw. funktionelle Substituenten, insbesondere Hydroxylsubstituenten, aufweisen können, wobei jedoch Epihalogenhydrine ausgenommen sind. Besonders gut geeignet sind beispielsweise Ethylenoxid, Propylenoxid, 1,2-Butylenoxid, 2,3-Butylenoxid, Isobutylenoxid, 1,2-Epoxyhexan, 1,2-Epoxydecan, 1,2-Epoxydodecan, Styroloxid, Cyclohexenoxid oder Glycidylalkohol. Die hydrophil-hydrophoben Eigenschaften des polymeren kationischen Emulgators können sowohl über die Art des Epoxids als auch über den Quaternierungsgrad in weiten Grenzen beeinflußt werden.

Aus den Patentschriften FR-PS 1 173 575 und GB-PS 1 281 683 sowie der deutschen Offenlegungsschrift 2 258 868 ist die Quaternierung von Dialkylaminogruppen enthaltenden Homo- oder Copolymerisaten mit Ethylenoxid, Propylenoxid oder Styroloxid bekannt. Monoepoxide mit längeren Alkylketten werden jedoch nicht beansprucht. Weiterhin wird nichts über eine Verwendung solcher Produkte als elektrolyt-, thermo- und scherstabile Papierleimungsmittel mit günstigem Schaumverhalten mitgeteilt.

Anschließend an die Quaternierung erfolgt die Zugabe der restlichen Säure und die Auflösung zu wäßrigen Lösungen mit einer Konzentration von 10 bis 30 Gew.-%, vorzugsweise 15 bis 25 Gew.-%. Die so erhaltenen Emulgatorlösungen können nun noch destillativ von organischem Lösungsmittel befreit werden; die Entfernung des organischen Lösungsmittels ist jedoch nicht notwendig, da das Lösungsmittel im weiteren Reaktionsverlauf der Emulsionspolymerisation im allgemeinen nicht stört.

Für die Emulgierung reicht es aus, wenn man die quaternierten kationischen Terpolymeren ohne weitere Zusätze für die Emulsionspolymerisation einsetzt. In manchen Fällen erweist es sich jedoch als recht günstig, wenn man zusammen mit dem polymeren kationischen Emulgator oligomere nichtionogene und/oder niedermolekulare kationische Hilfsemulgatoren in Mengenverhältnissen von 1 bis 40 Gew.-%, vorzugsweise 3 bis 20 Gew.-%, bezogen auf den kationischen Emulgator einsetzt.

Als nichtionogene Hilfsemulgatoren eignen sich Umsetzungsprodukte von aliphatischen, araliphatischen, cycloaliphatischen oder aromatischen Carbonsäure, Alkoholen, Phenolderivaten bzw. Aminen mit Epoxiden wie z.B. Ethylenoxid.

Beispiele dafür sind Umsetzungsprodukte von Ethylenoxid mit Carbonsäuren wie z.B. Laurinsäure, Stearinsäure, Ölsäure, den Carbonsäuren des Ricinusöls, Abietinsäure, mit längerkettigen Alkoholen wie Oleylalkohol, Laurylalkohol, Stearylalkohol, mit Phenolderivaten wie z.B., substituierten Benzyl-, Phenylphenolen, Nonylphenol und mit längerkettigen Aminen wie z.B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Als kationische, niedermolekulare Hilfsemulgatoren sind quaternierte Ammoniumsalze, wie z.B. Benzyldodecyl-dimethyl-ammoniumchlorid, geeignet. Die genannten Hilfsemulgatoren bewirken eine zusätzliche Emulgierung des Monomergemischs und in manchen Fällen eine Stabilitätssteigerung der kolloiddispersen Leimungsmittel. Ein Einsatz mit zu hohen Mengen an diesen Hilfsdispergatoren ist jedoch nicht anzuraten, da dann leicht unerwünschte Schäumen auftreten kann.

Als Acrylsäure- bzw. Methacrylsäureester, die bei der radikalischen Emulsionscopolymerisation als Comonomere eingesetzt werden, sind vorzugsweise solche Verbindungen geeignet, die mit (Meth)acrylnitril oder Styrol bzw. Mischungen hiervon Copolymerisate mit Filmbildungstemperaturen unterhalb von 100°C bilden.

Copolymere, die aufgrund der Lage ihres Glaspunkts höhere Filmbildungstemperaturen aufweisen, besitzen nur eine unzureichende Leimungswirkung. Prinzipiell geeignet sind Acrylate wie Methyl-, Ethyl-, n-Butyl- und 2-Ethylhexylacrylat sowie Methacrylate wie Methylmethacrylat und n-Butylmethacrylat. Sie können einzeln oder in Mischung mit Methacrylnitril, Acrylnitril oder Styrol bzw. mit Mischungen von zwei der zuletztgenannten Comonomeren oder mit Mischungen aller drei Monomeren copolymerisiert werden. Der Gehalt an Styrol, Acrylnitril oder Methacrylnitril bzw. den Mischungen dieser Komponenten kann zwischen 5 bis 95, vorzugsweise 20 bis 80 Gew.-% liegen. Einstellungen mit zu wenig Styrol, Acrylnitril oder Methacrylnitril im Copolymerisat können aufgrund ihrer Klebrigkeit bei der Papierherstellung stören, bei Einstellungen mit sehr viel Styrol, Acrylnitril oder Methacrylnitril ist die Leimung des Papiers ungenügend.

Als Initiatoren für die Emulsionspolymerisation kommen bevorzugt wasserlösliche, Radikale liefernde, nichtionogene Peroxide wie Wasserstoffperoxid und t-Butylhydroperoxid sowie wasserlösliche Azoverbindungen, wie sie z.B. in der DE-OS 2 841 045

beschrieben sind, in Betracht. Weiterhin sind Redoxsysteme geeignet, die aus peroxidischen Initiatoren und Reduktionsmitteln wie Aminen, Polyaminen, Thioharnstoff, Eisen-II-salzen usw. bestehen. Als Initiatoren kommen auch wasserunlösliche Initiatoren, wie Azoisobutyronitril und Benzoylperoxid in Betracht. Letztere sind dann praktisch nur in der organischen Phase gelöst. Die genannten Initiatoren werden in Mengen von 0,1 bis 5 Gew.-%, bevorzugt 0,3 bis 3,0 Gew.-%, bezogen auf das Monomergemisch, hinzugegeben.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden in Mengen von 0,1 bis 2 Gew.-%, bezogen auf die Monomermischung, zugegeben.

Die Emulsionspolymerisation im wäßrigen Medium kann nach bekannten Polymerisationsverfahren sowohl diskontinuierlich als auch kontinuierlich oder im Zulaufverfahren durchgeführt werden. Besonders bevorzugt sind das kontinuierliche und das Zulaufverfahren. Bei letzterem wird unter Stickstoffatmosphäre Wasser zusammen mit einem Teil oder dem gesamten Emulgatorsystem und gegebenenfalls einem Teil des Monomergemischs vorgelegt, auf die Polymerisationstemperatur von 20 bis 150°C, vorzugsweise 50 bis 100°C, erhitzt und das Monomergemisch sowie der Initiator und gegebenenfalls Emulgator innerhalb von 0,5 bis 10 Stunden, bevorzugt 1 bis 6 Stunden, zugetropft.

Nach einiger Zeit wird nachaktiviert und die Reaktion bis zu einem Umsatz von ca. 99,0% bis 99,9 Gew.-% vervollständigt. Das Gewichtsverhältnis Emulgator zu Polymer beträgt hierbei 1 : 9 bis 7 : 3, vorzugsweise 1 : 4 bis 1 : 1. Restmonomere sowie eventuell noch vorhandenes organisches Lösungsmittel werden im Anschluß an die Emulsionscopolymerisation im Vakuum destillativ entfernt. Danach wird soviel Wasser zugesetzt, bis eine ca. 10 bis 35 gew.-%ige wäßrige kolloiddisperse Lösung resultiert. Die Viskosität dieser Dispersionen, gemessen in einem Rotationsviskosimeter bei 20°C, liegt im allgemeinen unterhalb von 50 mPa.s. Die mittels Laser-Streulicht-Spektroskopie gemessenen mittleren Teilchendurchmesser liegen je nach Reaktionsbedingungen zwischen 15 und 200 nm, vorzugsweise zwischen 20 und 150 nm. Dispersionen mit Teilchengrößen unter 50 nm erscheinen transparent, während solche mit größeren Teilchen trüber erscheinen. Auch die Stabilität der Dispersionen mit Teilchengrößen unter 100 nm ist besser als die mit Teilchengrößen über 100 nm, was z.B. durch thermische Belastung bei Temperaturen über 80°C gezeigt werden kann. Bei grobteiligeren Dispersionen ist meist der Anteil an Sedimenten erheblich höher als bei feinteiligen.

Die Stabilität der erfindungsgemäßen kolloiddispersen Leimungsmittel wird auch durch Pfropfanteile des Polymeren auf den in relativ großen Mengen vorhandenen polymeren Emulgator erhöht. Solche Pfropfreaktionen, die durch Übertragungsreaktionen durch den Emulgator ausgelöst werden, sind in der Literatur bekannt [vgl. H. Gerrens, Fortschritte der Hochpolymer-Forschung, Band I, (1959) Seite 300].

Die erfindungsgemäßen Leimungsmittel für Papier sind nach allen bei der Papierherstellung für die Oberflächen- und Masseleimung gebräuchlichen Arbeitsmethoden einsetzbar.

Neben ihrer weitgehenden pH-Unabhängigkeit der Leimungswirkung sowie dem generell sehr hohen technischen Leimungsniveau ist nochmals die gegenüber den Papierleimungsmitteln der EP 0 058 313 und der DE-OS 3 401 573 verbesserte Elektrolyt-, Scher- und Thermostabilität sowie die verringerte Schaumneigung hervorzuheben, was in den folgenden Beispielen erläutert wird.

*Beispiel 1*

*Herstellung der kationischen Emulgatoren*

In einem 40 ltr.-Autoklaven werden 5720 g Isopropanol vorgelegt. Der Autoklav wird gründlich mit Stickstoff gespült und danach auf 80°C erwärmt. Bei dieser Temperatur werden die Mischungen I und die Lösungen II der Tabelle I innerhalb von 4 Stunden unter Luftausschluß zudosiert. Dann wird 1 bis 2 Stunden nachgerührt und danach mit Lösung III nachaktiviert. Daraufhin wird ca. 6 bis 12 Stunden bei 80°C gerührt. Nach der Terpolymerisation wird bei unveränderter Temperatur die in Tabelle I angegebene Menge an Essigsäure (IV) zu dem Polymerisat zudosiert.

Anschließend wird das Monoepoxid (V) als Quaternierungsmittel in ca. 15 min. zudosiert und ca. 1 Stunde gerührt. Daraufhin wird mit der restlichen Menge an Essigsäure (VI) versetzt. In einem 120 ltr.-Vorratsgefäß, das mit einem Rührer versehen ist, werden ca. 63-65 ltr. entionisiertes Wasser von einer Temperatur von ca. 60°C vorgelegt und der Inhalt des 40 ltr.-Autoklaven hiermit vereinigt.

Die Herstellung einer homogenen wäßrigen Lösung erfolgt bei intensivem Rühren in kurzer Zeit. Die wässrigen Lösungen, die noch organisches Lösungsmittel enthalten, besitzen die ebenfalls in Tabelle I verzeichneten Eigenschaften.

*Tabelle I*

| Emulgator | A | B | C | D | E |
|---|---|---|---|---|---|
| Polymerisations- und Quaternierungstemperatur (°C) | 80 | 80 | 80 | 80 | 80 |
| I. N,N-Dimethylaminoethylmethacrylat (g) | 3217 | 3217 | 2257 | 3217 | 3217 |
| Styrol (g) | 10244 | 10244 | 10608 | 10244 | 10244 |
| Acrylnitril (g) | 2644 | 2644 | 3219 | 2644 | 2644 |

*Tabelle I (Fortsetzung)*

| Emulgator | A | B | C | D | E |
|---|---|---|---|---|---|
| II. Azoisobutyronitril (g) | 500 | 500 | 550 | 500 | 500 |
| Aceton (g) | 3000 | 3000 | 3000 | 3000 | 3000 |
| III. Azoisobutyronitril (g) | 50 | 50 | 50 | 50 | 50 |
| Aceton (g) | 300 | 300 | 300 | 300 | 300 |
| IV. Essigsäure (g) | 1229 | 984 | 690 | 984 | 984 |
| V. 1,2-Epoxydodecan (g) | 1131 | – | – | – | – |
| 1,2-Epoxyhexan (g) | – | 1025 | 719 | – | – |
| 1,2-Epoxybutan (g) | – | – | – | 885 | – |
| Propylenoxid (g) | – | – | – | – | 891 |
| VI. Essigsäure (g) | 1230 | 1475 | 1035 | 1475 | 1475 |
| Konzentration (%) | 20,3 | 20,1 | 20,2 | 20,0 | 19,9 |
| Viskosität (bei 20°C) [mPa.s]* | 50-100 | 30-70 | 300-500 | 20-50 | 20-50 |
| pH-Wert: | 4,2 | 4,2 | 4,1 | 4,2 | 4,2 |
| Aussehen der Emulgatorlösung: | leicht trüb | klar | klar | klar | klar |

* Viskosität ist nicht konstant, da Proben strukturviskos sind

*Beispiele 2 bis 4*

In einem 40 ltr.-Rührautoklaven werden 9720 g entionisiertes Wasser vorgelegt. Danach wird unter Stickstoffatmosphäre gründlich ausgekocht und auf 70°C abgekühlt. Danach werden die Emulsionen I (vgl. Tabelle I) unter Luftausschluß zur Vorlage hinzugegeben. Anschließend wird 12 g einer 35%igen Wasserstoffperoxidlösung zugegeben. Nach ca. 15-30 Minuten werden die Monomermischungen II und die Initiatormischungen III in ca. 4 Stunden zudosiert. Danach wird noch 2 bis 5 Stunden nachgerührt, anschließend wird mit Mischung IV nachaktiviert und noch ca. 2 bis 10 Stunden nachpolymerisiert. Danach werden im Wasserstrahlvakuum bei ca. 200 bis 400 mbar ca. 1,5 bis 2 ltr. eines Gemisches aus Wasser, organischem Lösungsmittel (Isopropanol und Aceton) und Restmonomeren abdestilliert und durch dieselbe Menge entionisiertes Wasser ersetzt. Die physikalisch-chemischen Eigenschaften der so erhaltenen kolloiddispersen Lösungen sind ebenfalls in Tabelle II verzeichnet.

*Tabelle II*

| Beispiel | 2 | 3 | 4 |
|---|---|---|---|
| I. Emulgator A (vgl. Tab. I) (g) | 12400 | 12400 | 12400 |
| Styrol (g) | 124 | – | – |
| Acrylnitril (g) | – | 124 | – |
| Methacrylnitril (g) | – | – | 124 |
| Acrylsäure-n-butylester (g) | 124 | 124 | 124 |
| II. Styrol (g) | 2356 | – | – |
| Acrylnitril (g) | – | 2356 | – |
| Methacrylnitril (g) | – | – | 2356 |
| Acrylsäure-n-butylester (g) | 2356 | 2356 | 2356 |
| III. Wasserstoffperoxid (35%ig) (g) | 198 | 198 | 198 |
| entionisiertes Wasser (g) | 2480 | 2480 | 2480 |
| IV. Wasserstoffperoxid (35%ig) (g) | 25 | 25 | 50 |
| entionisiertes Wasser (g) | 100 | 100 | 100 |
| Konzentration (Gew.-%) | 24,8 | 25,0 | 24,9 |
| Viskosität (bei 23°C) [mPa.s] | <50 | <50 | <50 |
| pH-Wert | 4,3 | 4,4 | 4,3 |
| Aussehen der kolloiddispersen Lösung | wenig trüb | wenig trüb | wenig trüb |
| mittlerer Teilchendurchmesser $d_2$ [nm] | 67 | 48 | 52 |

*Beispiele 5 und 6*

Die kolloiddispersen Leimungsmittel 5 und 6 werden wie die entsprechenden Leimungsmittel 2 und 3 hergestellt, wobei allerdings Emulgator A gegen Emulgator B (vgl. Tab. I) ausgetauscht wird.

*Tabelle III*

| Beispiel | 5 | 6 |
|---|---|---|
| I. Emulgator B (vgl. Tab. I) (g) | 12400 | 12400 |
| Styrol (g) | 124 | – |
| Acrylnitril (g) | – | 124 |
| Acrylsäure-n-butylester (g) | 124 | 124 |
| II. Styrol (g) | 2356 | – |
| Acrylnitril (g) | – | 2356 |
| Acrylsäure-n-butylester (g) | 2356 | 2356 |
| Konzentration (Gew.-%) | 24,7 | 24,6 |
| Viskosität (bei 23°C) [mPa.s] | <50 | <50 |
| pH-Wert | 4,2 | 4,3 |
| Aussehen der kolloid-dispersen Lösung | transparent | transparent |
| mittlerer Teilchendurchmesser $d_2$ [nm] | 39 | 35 |

*Beispiele 7 und 8*

Die kolloiddispersen Leimungsmittel 7 und 8 werden wie die entsprechenden Leimungsmittel 2 und 3 hergestellt, wobei allerdings Emulgator A gegen Emulgator C (vgl. Tab. I) ausgetauscht wird.

*Tabelle IV*

| Beispiel | 7 | 8 |
|---|---|---|
| I. Emulgator C (vgl. Tab. I) (g) | 12400 | 12400 |
| Styrol (g) | 124 | – |
| Acrylnitril (g) | – | 124 |
| Acrylsäure-n-butylester (g) | 124 | 124 |
| II. Styrol (g) | 2356 | – |
| Acrylnitril (g) | – | 2356 |
| Acrylsäure-n-butylester (g) | 2356 | 2356 |
| Konzentration (Gew.-%) | 25,2 | 25,1 |
| Viskosität (bei 23°C) [mPa.s] | <50 | <50 |
| Aussehen der kolloid-dispersen Lösung | transparent | transparent |
| mittlerer Teilchendurchmesser $d_2$ [nm] | 45 | 37 |

*Beispiele 9 und 10*

Die kolloiddispersen Leimungsmittel 9 und 10 werden wie die entsprechenden Leimungsmittel 2 und 3 hergestellt, wobei allerdings Emulgator A gegen Emulgator D (vgl. Tab. I) ausgetauscht wird.

*Tabelle V*

| Beispiel | 9 | 10 |
|---|---|---|
| I. Emulgator D (vgl. Tab. I) (g) | 12400 | 12400 |
| Styrol (g) | 124 | – |
| Acrylnitril (g) | – | 124 |
| Acrylsäure-n-butylester (g) | 124 | 124 |
| II. Styrol (g) | 2356 | – |
| Acrylnitril (g) | – | 2356 |
| Acrylsäure-n-butylester (g) | 2356 | 2356 |
| Konzentration (Gew.-%) | 25,3 | 25,1 |
| Viskosität (bei 23°C) [mPa.s] | <50 | <50 |
| Aussehen der kolloid-dispersen Lösung | transparent | transparent |
| mittlerer Teilchendurchmesser $d_2$ [nm] | 48 | 43 |

*Beispiele 11 und 12*

Die kolloiddispersen Leimungsmittel 11 und 12 werden wie die entsprechenden Leimungsmittel 2 und 3 hergestellt, wobei allerdings Emulgator A gegen Emulgator E (vgl. Tab. I) ausgetauscht wird.

*Tabelle VI*

| Beispiel | 11 | 12 |
|---|---|---|
| I. Emulgator E (vgl. Tab. I) (g) | 12400 | 12400 |
| Styrol (g) | 124 | – |
| Acrylnitril (g) | – | 124 |
| Acrylsäure-n-butylester (g) | 124 | 124 |
| II. Styrol (g) | 2356 | – |
| Acrylnitril (g) | – | 2356 |
| Acrylsäure-n-butylester (g) | 2356 | 2356 |
| Konzentration (Gew.-%) | 25,4 | 24,8 |
| Viskosität (bei 23°C) [mPa.s] | <50 | <50 |
| Aussehen der kolloid-dispersen Lösung | transparent | transparent |
| mittlerer Teilchendurchmesser $d_2$ [nm] | 32 | 28 |

Als Leimungsflotte für die Oberflächenleimung wird eine Lösung von 5 Gew.-% Stärke (Perfectamyl® A 4692 der Firma AVEBE), 0,4 Gew.-% Natriumsulfat und 0,20 bzw. 0,25 Gew.-% des zu prüfenden Leimungsmittels (berechnet als Wirksubstanz) in 94,40 bzw. 94,35 Gew.-% Wasser verwendet. Vor dem Einsatz in der Leimpresse werden die Leimungsflotten im Wasserbad 30 min. lang auf 75°C erwärmt. Für die Leimung wird eine Laborleimpresse der Firma Werner Mathis, Zürich, Type HF eingesetzt. Die Leimungsflotte hat in der Leimpresse eine Temperatur von ca. 25°C. Das Papier wird mit einer Geschwindigkeit von 4 m/min. durchgezogen. Die

Trocknung der oberflächengeleimten Papiere erfolgt auf einem Trockenzylinder innerhalb von ca. 45 sec. bei ca. 100°C. Vor der Leimungsprüfung werden die Papiere 2 Stunden bei Raumtemperatur klimatisiert. Die Prüfung der Leimung erfolgt nach DIN 53 132. Dabei wird die Wasseraufnahme in g/m$^2$ nach einer Prüfzeit von 60 Sekunden ($Cobb_{60}$) bestimmt.

*Anwendungsbeispiel 1*

Dieses Beispiel zeigt die gute Wirksamkeit einiger Leimungsmittel nach Temperatur- und Elektrolytbelastung auf aluminiumsulfatfreiem Papier. Das verwendete Rohpapier hat folgende Zusammensetzung und Eigenschaften:
50 Gew.-% Nadelholzzellstoff, 50 Gew.-% Laubholzzellstoff; 9,5 Gew.-% Clay-Asche, pH-Wert im Stoffauflauf: 7,5; Naßaufnahme in der Laborleimpresse: ca. 80 Gew.-%, Papiergewicht: 80 g/m$^2$.

Als Vergleichssubstanz werden zwei Leimungsmittel gemäss EP 0 058 313 (Leimungsmittel 3 und 10) – hier als M bzw. N bezeichnet – herangezogen.

*Tabelle VII*

Oberflächenleimung auf aluminiumsulfatfreiem Papier nach Temperatur- und Elektrolytbelastung

| Leimungsmittel aus Beispiel | Wasseraufnahme in g/m$^2$ 0,20 Gew.-% Leimungsmittel (bezogen substanz) zur Flotte | bei Zusatz von 0,25 Gew.-% auf reine Wirk- |
|---|---|---|
| 3 | 37,8 | 35,3 |
| 5 | 35,3 | 33,1 |
| 6 | 34,1 | 32,4 |
| 8 | 35,2 | 33,5 |
| 10 | 34,7 | 32,3 |
| 11 | 35,8 | 33,6 |
| 12 | 33,2 | 31,3 |
| M | 45,2 | 40,5 |
| N | 65,5 | 61,3 |

Ohne Leimungsmittel beträgt die Wasseraufnahme 89,0 g/m$^2$.

*Anwendungsbeispiel 2*

Dieses Beispiel zeigt die geringe Schaumneigung der erfindungsgemäßen Leimungsmittel im Vergleich zu den Leimungsmitteln M und N gemäß EP 0 058 313. Die Schaumneigung wird dabei in Abwesenheit von Additiven wie z.B. zusätzlichen Emulgatoren und Entschäumern gemessen.

0,4 Gew.-% Wirksubstanz werden dabei in einer Leimungsflotte aus 5 Gew.-% handelsüblicher Stärke (Perfectamyl A 4692®) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm im freien Fall in ein graduiertes Becherglas geleitet. Das Volumen (in ml) des sich über der Flüssigkeitsoberfläche bildenden Schaums wird einmal sofort sowie nach einminütigem Stehen an der Luft bestimmt. Der erste Wert gibt dabei Aufschluß über die Schaumbildungstendenz des Leimungsmittels und der zweite Wert über die Schnelligkeit des Schaumabbaus bzw. dessen Stabilität.

*Tabelle VIII*

Schaumneigung von Leimungsmitteln

| Leimungsmittel aus Beispiel | Schaumvolumen sofort | in ml nach 1 min |
|---|---|---|
| 5 | 20 | 0 |
| 6 | 15 | 0 |
| 8 | 25 | 0 |
| 11 | 15 | 0 |
| 12 | 15 | 0 |
| M | 100 | 50 |
| N | 70 | 30 |

**Patentansprüche**

1. Kationische Leimungsmittel für Papier, dadurch erhältlich, daß man in wäßrigen Medium eine wasserlösliche kationische, chemisch einheitlich aufgebaute Terpolymerverbindung aus
   a) 7 bis 40 Gew.-% N,N-Dimethylaminoethylacrylat und/oder -methacrylat,
   b) 40 bis 80 Gew.-% Styrol und
   c) 4 bis 50 Gew.-% Acrylnitril,

auflöst, wobei die Summe der Komponenten a) bis c) stets 100 Gew.-% beträgt und von den Dimethylaminogruppen des Terpolymeren mindestens 10% mit Monoepoxiden, mit Ausnahme von Epihalogenhydrinen, quaterniert und die restlichen protoniert sind, und indem man in Gegenwart von 10 bis 70 Gew.-% – bezogen auf das folgende Monomergemisch – dieses Emulgators
   d) 5 bis 95 Gew.-% Acrylnitril, Methacrylnitril oder Styrol bzw. deren Mischungen und
   e) 5 bis 95 Gew.-% Acrylsäure- und/oder Methacrylsäureester mit 1 bis 12 C-Atomen im Alkoholrest

– wobei die Summe der Komponenten d) und e) stets 100 Gew.-% beträgt – emulgiert und die so erhaltene Emulsion einer radikalisch initiierten Emulsionspolymerisation bei Temperaturen von 20 bis 150°C unterwirft.

2. Leimungsmittel für Papier gemäß Anspruch 1, dadurch gekennzeichnet, daß die kationische, chemisch einheitlich aufgebaute Terpolymerverbindung aus
   a) 8 bis 30 Gew.-% N,N-Dimethylaminoethylacrylat und/oder -methacrylat,
   b) 40 bis 80 Gew.-% Styrol und
   c) 5 bis 40 Gew.-% Acrylnitril

besteht, wobei die Summe der Komponenten a) bis c) stets 100 Gew.-% beträgt.

3. Leimungsmittel für Papier gemäß den Ansprüchen 1-2, dadurch gekennzeichnet, daß das Monomergemisch aus
   d) 20 bis 80 Gew.-% Acrylnitril, Methacrylnitril oder Styrol bzw. deren Mischungen und
   e) 20 bis 80 Gew.-% Acrylsäure- und/oder Methacrylsäureester mit 1 bis 12 C-Atomen im Alkoholrest besteht,

wobei die Summe der Komponenten d) und e) 100 Gew.-% beträgt.

4. Leimungsmittel für Papier gemäß den Ansprüchen 1-3, dadurch gekennzeichnet, daß man neben dem polymeren kationischen Emulgator gemäß Anspruch 1 einen kationischen und/oder nichtionogenen Hilfsemulgator in Mengen von 1 bis 40 Gew.-%, bezogen auf den vorstehenden kationischen Emulgator einsetzt, wobei der nichtionogene Emulgator die Formel

$$R_1\text{-}X\text{-}(CH_2\text{-}CH_2\text{-}O)_n\text{-}H \quad \text{(II)}$$

besitzt, worin

X O, NH oder COO bedeutet,
$R_1$ ein höherer aliphatischer cycloaliphatischer, araliphatischer oder aromatischer Kohlenwasserstoffrest mit 6-30 C-Atomen ist, und
n eine ganze Zahl $\geq$ 2 ist,

und wobei der kationische Hilfsemulgator die Formel

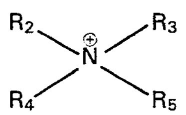 $Y^{\ominus}$

besitzt, wobei

$R_2$ und $R_3$ höhere aliphatische bzw. araliphatische Kohlenwasserstoffreste mit 6 bis 20 C-Atomen,
$R_4$ und $R_5$ niedere aliphatische Kohlenwasserstoffreste mit 1 bis 6 C-Atomen und
$Y^{\ominus}$ ein Halogenidion darstellen.

5. Leimungsmittel gemäß den Ansprüchen 1-4, dadurch gekennzeichnet, daß das Gewichtsverhältnis zwischen polymerem kationischem Emulgator und Monomergemisch aus d) und e) 1 : 4 bis 1 : 1 beträgt.

6. Leimungsmittel gemäß den Ansprüchen 1-5, dadurch gekennzeichnet, daß die Emulsionspolymerisation mit wasserlöslichen, Radikale liefernden, nichtionogenen Peroxiden und/oder Azoverbindungen, gegebenenfalls als Redoxysystem, in Mengen von 0,1 bis 5 Gew.-% bezogen auf das Monomergemisch initiiert wird.

7. Leimungsmittel gemäß den Ansprüchen 1-6, dadurch gekennzeichnet, daß sie in Form kolloiddisperser Lösungen mit mittleren Teilchendurchmessern von 15-200 nm, vorzugsweise 20-150 nm vorliegen.

8. Leimungsmittel gemäß den Ansprüchen 1-7, dadurch gekennzeichnet, daß das chemisch einheitlich aufgebaute Terpolymer aus N,N-Dimethylaminoethyl(meth)acrylat, Styrol und Acrylnitril im organischen Medium nach partieller oder vollständiger Neutralisation mit Säure mit Monoepoxiden quaterniert ist.

9. Leimungsmittel gemäß den Ansprüchen 1-8, dadurch gekennzeichnet, daß das Terpolymer mit Monoepoxiden der Formel

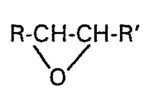

quaterniert ist, wobei R und R' für gleiche oder verschiedene Reste stehen und Wasserstoff, eine Alkylgruppe mit 1 bis 16 Kohlenstoffatomen, eine Cycloalkylgruppe mit 5 bis 12 Kohlenstoffatomen oder eine Arylgruppe mit 6 bis 12 Kohlenstoffatomen bedeuten, wobei die genannten Substituenten auch Heteroatome bzw. funktionelle Substituenten aufweisen können, wobei Epihalogenhydrine ausgenommen sind.

**Claims**

1. Cationic sizing agents for paper, obtainable by a process, in which a water-soluble cationic terpolymer compound, built up in a chemically uniform manner, of

a) 7 to 40% by weight of N,N-dimethylamino ethyl acrylate and/or methacrylate,
b) 40 to 80% by weight of styrene and
c) 4 to 50% by weight of acrylonitrile,

the sum of components a) to c) always being 100% by weight and at least 10% of the dimethylamino groups of the terpolymer being quaternized with monoepoxides, with the exception of epihalogenohydrins, and the remainder protonated, is dissolved in an aqueous medium and, in the presence of 10 to 70% by weight – based on the following monomer mixture – of this emulsifier,

d) 5 to 95% by weight of acrylonitrile, methacrylonitrile or styrene or mixtures thereof and
e) 5 to 95% by weight of acrylic acid ester and/or methacrylic acid ester with 1 to 12 C atoms in the alcohol radical

– the sum of components d) and e) always being 100% by weight – are emulsified and the emulsion thus obtained is subjected to emulsion polymerization, initiated by free radicals, at temperatures of 20 to 150°C.

2. Sizing agents for paper according to claim 1, characterized in that the cationic terpolymer compound, built up in a chemically uniform manner, consists of

a) 8 to 30% by weight of N,N-dimethylaminoethyl acrylate and/or methacrylate,
b) 40 to 80% by weight of styrene and
c) 5 to 40% by weight of acrylonitrile,

the sum of components a) to c) always being 100% by weight.

3. Sizing agents for paper according to claims 1-2, characterized in that the monomer mixture consists of

d) 20 to 80% by weight of acrylonitrile, methacrylonitrile or styrene or mixtures thereof and
e) 20 to 80 by weight of acrylic acid ester and/or methacrylic acid ester with 1 to 12 C atoms in the alcohol radical,

the sum of components d) and e) being 100% by weight.

4. Sizing agents for paper according to claims 1-3, characterized in that, in addition to the polymeric cationic emulsifier according to claim 1, a cationic and/or non-ionic auxiliary emulsifier is employed in amounts of 1 to 40% by weight, based on the above

cationic emulsifier, the non-ionic emulsifier having the formula.

$$R_1\text{-}X\text{-}(CH_2\text{-}CH_2\text{-}O)_n\text{-}H \qquad (II)$$

wherein

X denotes O, NH or COO,
$R_1$ is a higher aliphatic, cycloaliphatic, araliphatic or aromatic hydrocarbon radical with 6-30 C atoms and
n is an integer $\geq$ 2,

and the cationic auxiliary emulsifier having the formula

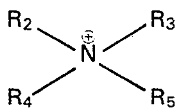 $Y^{\ominus}$

wherein

$R_2$ and $R_3$ represent higher aliphatic or araliphatic hydrocarbon radicals with 6 to 20 C atoms,
$R_4$ and $R_5$ represent lower aliphatic hydrocarbon radicals with 1 to 6 C atoms and
$Y^{\ominus}$ represents a halide ion.

5. Sizing agents according to claims 1-4, characterized in that the weight ratio between the polymeric cationic emulsifier and monomer mixture of d) and e) is 1 : 4 to 1 : 1.

6. Sizing agents according to claims 1-5, characterized in that the emulsion polymerization is initiated with watersoluble non-ionic peroxides and/or azo compounds which supply free radicals, if appropriate as a redox system, in amounts of 0.1 to 5% by weight, based on the monomer mixture.

7. Sizing agents according to claims 1-6, characterized in that they are in the form of colloidally disperse solutions with average particle diameters of 15-200 nm, preferably 20-150 nm.

8. Sizing agents according to claims 1-7, characterized in that the terpolymer, built up in a chemically uniform manner, of N,N-dimethylaminoethyl (meth)-acrylate, styrene and acrylonitrile is quaternized with monoepoxides in an organic medium, after partial or complete neutralization with acid.

9. Sizing agents according to claims 1-8, characterized in that the terpolymer is quaternized with monoepoxides of the formula

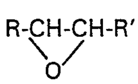

wherein
R and R' represent identical or different radicals and denote hydrogen, an alkyl group with 1 to 16 carbon atoms, a cycloalkyl group with 5 to 12 carbon atoms or an aryl group with 6 to 12 carbon atoms, it being possible for the substituents mentioned also to contain hetero atoms or functional substituents, with the exception of epihalogenohydrins.

**Revendications**

1. Agents cationiques de collage pour papier, pouvant être obtenus par dissolution dans un milieu aqueux d'un composé terpolymérique cationique hydrosoluble, de constitution chimique bien définie, constitué de
a) 7 à 40% en poids d'acrylate et/ou de méthacrylate de N,N-diméthylaminoéthyle,
b) 40 à 80% en poids de styrène et
c) 4 à 50% en poids d'acrylonitrile,
la somme des composants a) à c) s'élevant toujours à 100% en poids, et au moins 10% des groupes diméthylamino du terpolymère sont quaternisés avec des mono-époxydes, à l'exception d'épihalogénhydrines, et les groupes restants sont protonés, et on l'émulsionne en présence de 10 à 70% en poids – par rapport au mélange suivant de monomères – de cet émulsionnant
d) 5 à 95% en poids d'acrylonitrile, de méthacrylonitrile ou de styrène ou de leurs mélanges et
e) 5 à 95% en poids d'ester d'acide acrylique et/ou d'acide méthacrylique ayant 1 à 12 atomes de carbone dans le reste alcool,
– la somme des composants d) et e) s'élevant toujours à 100% en poids – et on soumet l'émulsion ainsi obtenue à une polymérisation en émulsion déclenchée par des radicaux, à des températures de 20 à 150°C.

2. Agents de collage pour papier suivant la revendication 1, caractérisés en ce que le composé terpolymérique cationique à structure chimique bien définie est constitué de
a) 8 à 30% en poids d'acrylate et/ou de méthacrylate de N,N-diméthylaminoéthyle,
b) 40 à 80% en poids de styrène et
c) 5 à 40% en poids d'acrylonitrile,
la somme des composants a) à c) s'élevant toujours à 100% en poids.

3. Agents de collage pour papier suivant les revendications 1 et 2, caractérisés en ce que le mélange de monomères est constitué de
d) 20 à 80% en poids d'acrylonitrile, de méthacrylonitrile ou de styrène ou de leurs mélanges et
e) 20 à 80% en poids d'esters d'acide acrylique et/ou d'acide méthacrylique ayant 1 à 12 atomes de carbone dans le reste alcool,
la somme des composants d) et e) s'élevant à 100% en poids.

4. Agents de collage pour papier suivant les revendications 1 à 3, caractérisés en ce qu'on utilise en plus de l'émulsionnant cationique polymérique suivant la revendication 1, un émulsionnant auxiliaire cationique et/ou non ionogène en quantités de 1 à 40% en poids, par rapport à l'émulsionnant cationique présent, l'émulsionnant non ionogène possédant la formule

$$R_1\text{-}X\text{-}(CH_2\text{-}CH_2\text{-}O)_n\text{-}H \qquad (II)$$

dans laquelle

X représente O, NH ou COO,
$R_1$ est un reste hydrocarboné aliphatique, cycloali-

phatique, araliphatique ou aromatique supérieur ayant 6 à 30 atomes de carbone, et

n est un nombre entier supérieur ou égal à 2,

l'émulsionnant cationique auxiliaire répondant à la formule

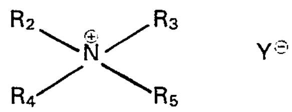

dans laquelle

$R_2$ et $R_3$ sont des restes hydrocarbonés aliphatiques ou araliphatiques supérieurs ayant 6 à 20 atomes de carbone,

$R_4$ et $R_5$ sont des restes hydrocarbonés aliphatiques inférieurs ayant 1 à 6 atomes de carbone et

$Y^{\ominus}$ représente un ion halogénure.

5. Agents de collage suivant les revendications 1 à 4, caractérisés en ce que le rapport en poids entre l'émulsionnant cationique polymérique et le mélange de monomères d) et e) a une valeur de 1 : 4 à 1 : 1.

6. Agents de collage suivant les revendications 1 à 5, caractérisés en ce que la polymérisation en émulsion est déclenchée avec des composés azoïques et/ou des peroxydes non ionogènes hydrosolubles fournissant des radicaux, le cas échéant sous forme d'un système Redox, en quantités de 0,1 à 5% en poids par rapport au mélange de monomères.

7. Agents de collage suivant les revendications 1 à 6, caractérisés en ce qu'ils sont présents sous forme de solutions en dispersion colloïdale avec des diamètres moyens de particules de 15 à 200 nm, de préférence de 20 à 150 nm.

8. Agents de collage suivant les revendications 1-7, caractérisés en ce que le terpolymère à structure chimique bien définie constitué de (méth)acrylate de N,N-diméthylaminoéthyle, de styrène et d'acrylonitrile en milieu organique est quaternisé avec des mono-époxydes après neutralisation partielle ou totale avec un acide.

9. Agents de collage suivant les revendications 1 à 8, caractérisés en ce que le terpolymère est quaternisé avec des mono-époxydes de formule

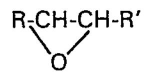

où R et R' sont des restes identiques ou différents et représentent l'hydrogène, un groupe alkyle ayant 1 à 16 atomes de carbone, un groupe cycloalkyle ayant 5 à 12 atomes de carbone ou un groupe aryle ayant 6 à 12 atomes de carbone, les substituants mentionnés pouvant également présenter des hétéroatomes ou des substituants fonctionnels, à l'exception d'épihalogénhydrines.